# FASCICULE DE BREVET EUROPEEN

(11) **EP 2 979 020 B1**
(45) Date de publication et mention de la délivrance du brevet: **11.01.2017**
(21) Numéro de dépôt: 14718675.3
(22) Date de dépôt: 26.03.2014
(51) Int. Cl.: F01D 25/14, F16L 59/065, F02K 9/60, F16L 59/12, F17C 1/12

(54) **PROCÉDÉ ET DISPOSITIF D'ISOLATION THERMIQUE D'UN ÉQUIPEMENT**
VERFAHREN UND VORRICHTUNG ZUR WÄRMEISOLIERUNG EINES GEGENSTANDES ODER EINER AUSRÜSTUNG
METHOD AND DEVICE FOR THERMALLY INSULATING AN ITEM OF EQUIPMENT

(30) Priorité: 26.03.2013 FR 1352704
(43) Date de publication de la demande: 03.02.2016
(73) Titulaire: SNECMA, 75015 Paris (FR); Centre National d'Etudes Spatiales (CNES), 75001 Paris (FR)
(72) Inventeur: CONRARDY, Jean-Marie, 27940 Courcelles Sur Seine (FR); GONCALVES, Brice, 27400 Louviers (FR)
(74) Mandataire: Gilbey, Vincent
(86) Numéro de dépôt international: PCT/FR2014/050707
(87) Numéro de publication internationale: WO 2014/155004

(56) Documents cités:
- EP-A1- 0 263 928
- EP-A1- 0 658 717
- EP-A2- 2 390 549

## Description

L'invention concerne un procédé et un dispositif d'isolation thermique d'un équipement, notamment d'un équipement de cryogénie.

Le domaine d'application de l'invention concerne notamment, mais pas exclusivement, les moteurs d'aéronef, d'astronef ou de fusée.

Ainsi, dans le cadre de développements sur les moteurs spatiaux à ergols liquides cryogéniques tels que l'hydrogène liquide, dit LH2, et l'oxygène liquide, dit LOX, la société demanderesse a cherché à améliorer les performances de ses lanceurs.

De tels lanceurs sont équipés de différents équipements, dits cryogéniques, c'est-à-dire travaillant à certains moments avec des ergols présentant de très basses températures, en deçà de -150 °C.

De tels équipements comprennent aussi bien des équipements restant au sol que des équipements embarqués sur l'étage cryogénique ou sur d'autres étages du lanceur. Par exemple, de tels équipements comprennent un dispositif d'avitaillement de propulseurs cryogéniques pour un lanceur, des tuyauteries ou canalisations, des turbopompes, des vannes, des échangeurs thermiques....

Juste avant le démarrage du moteur, ces équipements doivent être mis en froid, par une circulation d'ergols en provenance soit de l'interface du lanceur avec le sol, pour un étage inférieur, soit d'un réservoir, dans le cas d'un étage supérieur. La performance du lanceur est dépendante de la consommation des ergols pendant cette phase de mise en froid. L'objectif est donc consommer le moins possible d'ergols avec l'utilisation d'un système d'isolation performant.

Une problématique significative consiste à réussir à isoler thermiquement des équipements de formes complexes des moteurs spatiaux en évitant le cryopompage, c'est-à-dire la formation de condensats et/ou de givre sur les parois froides de l'équipement. Ce phénomène intervient lorsque l'isolation n'est pas étanche et laisse passer l'air ambiant. Alors, la vapeur d'eau contenu dans l'air devient du givre au contact des parois, et pour les équipements contenant de l'hydrogène liquide, l'air devient liquide, ou solide en fonction de la température de la paroi.

Cette situation engendre un apport de chaleur important à l'équipement et donc une consommation d'ergols supplémentaire pour sa mise en froid ou son maintien en froid. Par ailleurs, la présence de condensats et/ou de givre sur les parois de ces équipements peut affecter le fonctionnement du moteur en apportant un environnement inapproprié à de l'instrumentation située sur la paroi de l'équipement, ou à d'autres organes du moteur par chute éventuelle de la température.

Selon une première voie utilisée, des blocs en mousse de polyuréthane sont moulés autour de la paroi externe de l'équipement. Les brides sont recouvertes par des coquilles en mousse se chevauchant entre elles. La surface externe de ce dispositif d'isolation est protégée et étanchée au moyen de bandes d'aluminium adhésives.

Egalement, il est parfois mis en oeuvre une isolation en mousse polyimide enrobée par du ruban adhésif qui n'empêche cependant pas la formation de cryopompage.

Il est également connu de rapporter des blocs de mousse sur la paroi sans collage, ces blocs de mousse étant maintenus par une double enveloppe balayée par de l'hélium afin d'éviter le cryopompage.

On connaît également une isolation à base de mousse de polyuréthane recouverte par un dépôt de nickel, placée dans des enveloppes étanches et des enceintes sous vide partiel. On connait par exemple du document EP 2390549 l'utilisation d'une pluralité d'éléments isolant disposés dans une membrane souple et étanche dans laquelle est formé un vide partiel.

Ces deux dernières solutions sont toutefois peu efficaces et sont coûteuses en plus d'alourdir significativement le lanceur.

Par ailleurs, on comprend que ces solutions ne permettent pas aisément le remplacement du dispositif d'isolation au cours de la vie de l'équipement lorsqu'une intervention est nécessaire sur l'équipement et que le dispositif d'isolation, placé à l'extérieur de l'équipement, est ouvert.

La présente invention a pour objectif de fournir un procédé et un dispositif d'isolation thermique d'un équipement permettant de surmonter les inconvénients de l'art antérieur et en particulier offrant la possibilité d'isoler thermiquement et de façon étanche l'équipement.

Egalement, on souhaite fournir un procédé et un dispositif d'isolation thermique d'un équipement laissant la possibilité de remplacer une partie de cette isolation en cas de travaux de maintenance d'une portion de l'équipement et/ou pour remplacer la partie défectueuse du dispositif d'équipement.

A cet effet, selon la présente invention, le procédé comprend les étapes suivantes :
a) on fournit au moins un bloc d'isolant thermique présentant une complémentarité de forme avec la face extérieure d'une portion dudit équipement,
b) on réalise au moins un premier perçage dudit bloc d'isolant présentant une première extrémité débouchant en regard de la face extérieure dudit équipement et une deuxième extrémité débouchant à l'écart de la face extérieure dudit équipement,
c) on place ledit bloc d'isolant thermique dans une enveloppe déformable réalisée dans un matériau étanche aux gaz de sorte que la paroi dudit premier perçage soit recouverte de ladite enveloppe étanche en laissant ouvertes la première extrémité et la deuxième extrémité dudit premier perçage et en ce que l'enveloppe définit, au niveau de la deuxième extrémité, une première ouverture qui communique avec le premier perçage et une deuxième ouverture qui communique avec l'espace situé entre le bloc isolant et l'enveloppe
d) on fixe le bloc d'isolant recouvert de l'enveloppe contre la face extérieure de ladite portion d'équipement par des moyens de liaison étanches et déformables de façon que l'espace délimité entre le bloc d'isolant et ladite portion d'équipement présente un contour fermé,
e) on relie la première ouverture et la deuxième ouverture à des moyens de mise en dépression,
f) on active lesdits moyens de mise en dépression, ce par quoi l'intérieur de l'enveloppe se trouve sous vide partiel et l'enveloppe est plaquée d'une part contre le bloc d'isolant et d'autre part contre ladite portion d'équipement, et
g) on ferme de façon étanche la première ouverture et la deuxième ouverture de l'enveloppe.

Par ailleurs, selon la présente invention, le dispositif d'isolation comprend un bloc d'isolant thermique présentant une complémentarité de forme avec la face extérieure d'une portion dudit équipement à isoler, ledit bloc d'isolant comprenant au moins un premier perçage présentant une première extrémité apte à déboucher en regard de la face extérieure dudit équipement et une deuxième extrémité apte à déboucher à l'écart de la face extérieure dudit équipement,
- une enveloppe déformable réalisée dans un matériau étanche aux gaz, ladite enveloppe entourant le bloc d'isolant de sorte que la paroi dudit premier perçage soit recouverte de ladite enveloppe étanche en laissant ouverte la première extrémité et la deuxième extrémité dudit premier perçage, l'enveloppe définissant, au niveau de la deuxième extrémité, une première ouverture qui communique avec le premier perçage et une deuxième ouverture qui communique avec l'espace situé entre le bloc isolant et l'enveloppe,
et la première ouverture et la deuxième ouverture de l'enveloppe étant fermées de façon étanche avec l'intérieur de l'enveloppe sous vide partiel.

De cette manière, on comprend que par le recours à des moyens de liaison souples et étanches, l'espace créé entre le bloc d'isolant et ladite portion d'équipement est fermé et procure une couche isolante supplémentaire.

Une telle étanchéité est obtenue par la mise en dépression, c'est-à dire en vide partiel (pression inférieure à la pression atmosphérique ou de façon plus générale à la pression extérieure), de l'espace entre l'enveloppe et le bloc d'isolant thermique qu'elle renferme, que ce soit en regard de l'équipement à isoler (paroi interne de l'enveloppe) ou sur la face du bloc d'isolant thermique tournée en direction opposée à l'équipement (paroi externe de l'enveloppe).

C'est de cette façon que l'on parvient à créer une barrière imperméable d'une part entre la face externe de l'équipement et la face de l'enveloppe tournée vers l'équipement (paroi interne de l'enveloppe) et d'autre part entre le bloc d'isolant thermique et la face du bloc d'isolant thermique tournée en direction opposée à l'équipement (paroi externe de l'enveloppe).

En effet, par la mise en dépression de l'intérieur de l'enveloppe et de l'espace situé entre cette enveloppe et la paroi de l'équipement, on réalise un placage de cette enveloppe d'une part contre le bloc de mousse et d'autre part contre l'équipement, l'enveloppe habillant étroitement ces surfaces en étant appliquée étroitement contre elles.

Cette solution présente aussi l'avantage supplémentaire, de permettre, en outre, de pouvoir permettre son remplacement par partie, chaque partie du dispositif d'isolation ou le dispositif d'isolation tout entier isolant une portion dudit équipement.

En effet, le dispositif et le procédé d'isolation thermique selon l'invention sont capables d'assurer l'isolation et l'étanchéité d'un équipement de formes complexes tout en permettant le remplacement par partie de l'isolation grâce à une adhésion et une mise sous vide.

Cette modularité du dispositif d'isolation permet d'isoler des équipements présentant des portions mobiles, notamment des portions montées en rotation, des portions vibrantes et/ou des portions instrumentées, c'est-à-dire présentant des instruments tels que des appareils de mesure, des capteurs, etc.

La solution proposée prend en compte cet environnement en termes de montage et de remplacement pour maintenance.

Par ailleurs, l'utilisation de l'enveloppe permet de réaliser une prévention vis-à-vis de la dégradation et de la génération de particules qui intervient dans bons nombres de cas de matériaux isolants.

Globalement, grâce à la solution selon la présente invention, il est possible d'isoler un équipement cryogénique de formes complexes tout en permettant une étanchéité entre ses parois extérieures et l'environnement ambiant.

La présente invention porte également sur un ensemble apte à être utilisé pour isoler un équipement, comprenant un dispositif tel que celui décrit précédemment et des moyens de liaison déformables aptes à fixer le bloc d'isolant recouvert de l'enveloppe contre la face extérieure de ladite portion d'équipement tout en délimitant, entre le bloc d'isolant et ladite portion d'équipement, un espace avec un contour fermé.

De préférence, lesdits moyens de liaison comportent des éléments adhésifs tels que des languettes ou bandes adhésives sur leurs deux faces. Alternativement, lesdits moyens de liaison comportent des éléments adhésifs tels qu'un bourrelet ou une languette faisant partie de ladite enveloppe 120 ou bien sont constitués d'un joint élastomère collé à ladite enveloppe 120.

La présente invention porte aussi sur un système isolé comprenant un équipement, tel qu'un équipement cryogénique, et un ensemble tel que celui décrit précédemment qui recouvre au moins partiellement la face extérieure dudit équipement.

D'autres avantages et caractéristiques de l'invention ressortiront à la lecture de la description suivante faite à titre d'exemple et en référence aux dessins annexés dans lesquels :
- la figure 1 est une vue schématique du dispositif d'isolation dans une première configuration et avant mise en oeuvre complète de ce procédé,
- la figure 2 correspond à la figure 1 après mise en oeuvre du procédé selon l'invention,
- la figure 3 est une vue schématique du dispositif d'isolation dans une deuxième configuration et avant mise en oeuvre complète de ce procédé,
- la figure 4 correspond à la figure 3 après mise en oeuvre du procédé selon l'invention, et
- la figure 5 représente une variante de réalisation de l'invention.

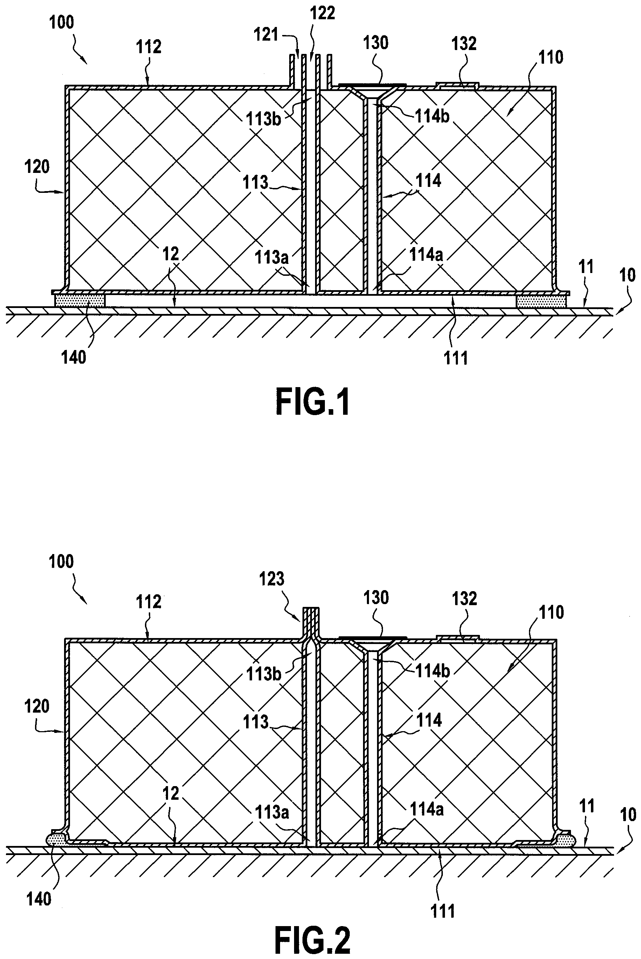

Comme on le voit sur la figure 1, l'équipement 10 est recouvert sur une portion 12 de sa face extérieure 11, par un dispositif d'isolation 100.

Ce dispositif d'isolation 100 comporte en premier lieu un bloc unitaire 110 de matériau isolant qui présente une épaisseur, de préférence sensiblement constante, une face 111 disposée en regard de la face extérieure 11 dudit équipement 10, et présentant une forme complémentaire à cette dernière, et une face 112 tournée en direction opposée à la face extérieure 11 dudit équipement 10.

De préférence, ledit bloc d'isolant 110 est réalisé dans un matériau poreux tel que :
- Mousse de polyuréthane à cellules ouvertes
- Mousse de polystyrène à cellules ouvertes
- Poudres compactées (silice, perlite, ...)
- Aérogels
- Fibres compactées

Ce matériau doit être capable de supporter l'effort de compression lorsqu'il est placé dans une enveloppe étanche mise au vide.

Il est possible de réaliser des blocs isolant 110 pour des formes simples, mais aussi des formes complexes grâce à des procédés de moulage, d'usinage, de jet d'eau, de laser...

Ce bloc isolant 110 présente un premier perçage 113 présentant une première extrémité 113a débouchant en regard de la face extérieure dudit équipement et une deuxième extrémité 113b débouchant à l'écart de la face extérieure dudit équipement, et de préférence comme il apparaît sur les figures 1 à 4, sur la face 112 tournée en direction opposée à la face extérieure 11 dudit équipement 10.

Par ailleurs, de façon préférentielle, mais non systématique, ce bloc isolant 110 présente un deuxième perçage 114 présentant une première extrémité 114a débouchant en regard de la face extérieure dudit équipement et une deuxième extrémité 114b débouchant à l'écart de la face extérieure dudit équipement, et de préférence comme il apparaît sur les figures 1 à 4, sur la face 112 tournée en direction opposée à la face extérieure 11 dudit équipement 10.

Ce dispositif d'isolation 100 comporte en second lieu une enveloppe 120 étanche, consistant en une membrane souple, enveloppant individuellement le bloc isolant 110 sur toutes ses faces, et donc notamment la face 111 disposée en regard de la face extérieure 11 dudit équipement 10 et la face 112 tournée en direction opposée à la face extérieure 11 dudit équipement 10.

Au départ, cette enveloppe 120 recouvre également toute la paroi du premier perçage 113, de façon continue avec le recouvrement de la face 111 disposée en regard de la face extérieure 11 dudit équipement 10, et en débouchant au niveau de la deuxième extrémité 113b du premier perçage 113 par une première ouverture 121. L'enveloppe 120 ne referme pas la première extrémité 113a du premier perçage 113 qui reste ouverte.

Egalement, cette enveloppe 120 comporte une deuxième ouverture 122 qui communique avec l'espace situé entre le bloc isolant 110 et l'enveloppe 120, cette deuxième ouverture 122 débouchant à l'écart de la face extérieure dudit équipement 10.

Dans le cas des figures 1 à 3, cette deuxième ouverture 122 de l'enveloppe est concentrique à la première ouverture 121 et entoure cette première ouverture 121.

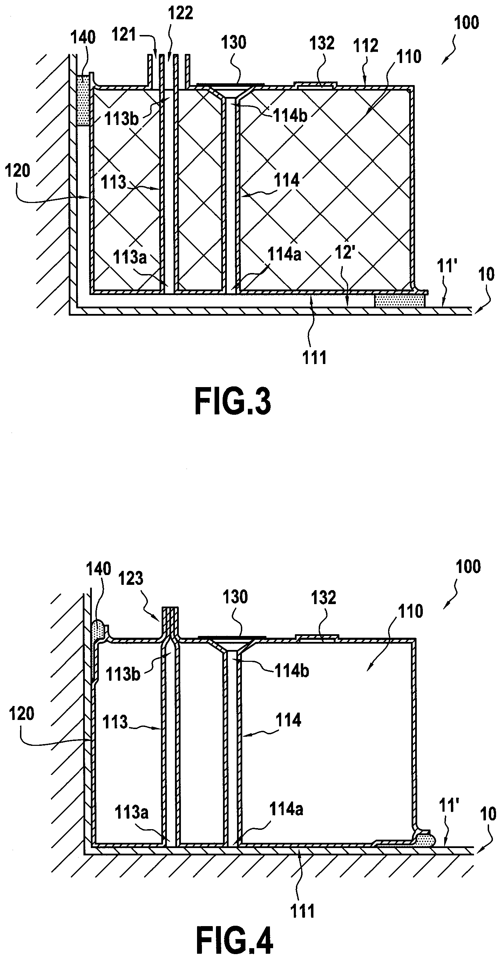

Par ailleurs, de façon préférentielle, mais non systématique, cette enveloppe 120 comporte d'autres ouvertures, comme il apparaît sur les figures 1 et 3.

En effet, de préférence :
- ledit bloc d'isolant 110 comporte un deuxième perçage 114 présentant une première extrémité 114a débouchant en regard de la face extérieure dudit équipement 10 et une deuxième extrémité 114b débouchant à l'écart de la face extérieure dudit équipement 10,
- ladite enveloppe étanche 120 recouvre la paroi du deuxième perçage 114 en laissant ouvertes la première extrémité 114a et la deuxième extrémité 114b de ce deuxième perçage 114,
- le dispositif 100 comporte en outre un premier indicateur de pression (130) 130 placé en refermant, de préférence de façon étanche, la deuxième extrémité 114b du deuxième perçage 114.

De préférence, ladite enveloppe 120 est réalisée dans un matériau élastomère tel que :
- PTFE (Téflon)
- Polyéthylène
- Polypropylène

De façon optionnelle, cette enveloppe 120 peut être rendue plus étanche par un dépôt métallique d'aluminium.

Enfin, pour relier le dispositif 100 à l'équipement 10, on a recours à un élément de liaison 140 placé entre la portion 12 de la face extérieure 11 de l'équipement 10, de façon à refermer complètement et de façon étanche aux gaz l'espace compris entre la portion 12 et l'enveloppe 120 recouvrant le bloc isolant 110.

Par exemple, il s'agit d'un bourrelet ou d'une languette faisant partie de l'enveloppe 120, constitué du même matériau que l'enveloppe 120, ou bien d'un joint élastomère collé à l'enveloppe 120 par une résine époxy adaptée aux basses températures. Pour améliorer l'étanchéité du contact, l'emploi de graisse à vide est possible

L'enveloppe 120 permet de réaliser une étanchéité et une isolation thermique de l'équipement, et prévient la génération de particules à partir du matériau isolant.

Comme on le voit sur les figures 2 et 4, après mise en place de tous les éléments du dispositif d'isolation 110, l'étape suivante du montage comprend le fait de réaliser un tirage au vide dans la première ouverture 121 et dans la deuxième ouverture 122, puis ensuite de refermer de façon étanche aux gaz, par exemple par sertissage, la première ouverture 121 et la deuxième ouverture 122 de l'enveloppe 120, et ce pour maintenir une pression inférieure à la pression atmosphérique : cela forme une attache 123 entre la première ouverture 121 et la deuxième ouverture 122, qui referme la deuxième extrémité 113b du premier perçage 113.

A noter que selon une variante de réalisation non représentée, la première ouverture 121 et la deuxième ouverture 122 ne sont pas placées l'une autour de l'autre (la deuxième ouverture 122 n'entoure pas la première ouverture 121 et se trouve placé à un autre emplacement, qui ne fait pas face à la portion 12), et sont refermées indépendamment en formant deux attache séparées, obtenues par deux opérations séparées de sertissage.

Ainsi, grâce au premier indicateur visuel de pression 130, il sera possible d'évaluer la présence d'une dépression dans l'espace situé entre l'enveloppe 120 et l'équipement 10, via le deuxième perçage 114, comme on le voit sur les figures 2 et 4.

Il est donc ainsi de s'assurer de l'étanchéité qui concerne la zone se situant entre l'enveloppe 120 et l'équipement 10, et ce grâce au premier indicateur de pression 130 refermant la deuxième extrémité 114b du deuxième perçage 114 du bloc isolant 110. En effet, le premier indicateur de pression 130 est soumis à la différence de pression entre cette zone et l'environnement ambiant.

Le contour de ce premier indicateur de pression 130 est fixé à la surface de l'enveloppe à l'emplacement de la deuxième extrémité 114b du deuxième perçage 114.

Comme on peut le voir sur les figures 1 à 4, de préférence, le dispositif d'isolation 100 comporte en outre un deuxième indicateur de pression 132 placé entre ladite enveloppe 120 et ledit bloc d'isolant 110, et ce pour s'assurer que le vide est maintenu sein à l'intérieur de l'enveloppe 120. Sur les figures 1 à 4, ce deuxième indicateur de pression 132 est positionné sur la face 112 tournée en direction opposée à la face extérieure 11 dudit équipement 10, mais il pourrait être positionné ailleurs à la surface du bloc d'isolation 110.

De préférence le premier indicateur de pression 130 et/ou le deuxième indicateur de pression 132 est (sont) un (des) indicateur(s) visuel(s) de pression utilisant les propriétés de matériaux sous compression : photoélasticité, caoutchouc, pastille flexible.

Dans ce cas, on privilégiera le fait que ladite enveloppe 120 est réalisée dans une matière transparente ou translucide, et ce afin de pouvoir lire à travers l'enveloppe un changement d'aspect du premier indicateur de pression 130 et/ou du deuxième indicateur de pression 132.

Ainsi, lorsqu'il sera en compression, le premier indicateur de pression 130 et/ou le deuxième indicateur de pression 132 va changer d'aspect.

Grâce au premier indicateur de pression 130 positionné dans l'enveloppe 120 du bloc isolant 110, il sera possible de savoir s'il existe effectivement un vide partiel à l'intérieur de l'enveloppe 120, et en cas de présence de plusieurs blocs d'isolant 110, il sera possible de savoir s'il existe effectivement un vide partiel dans chaque enveloppe 120.

La différence de la deuxième configuration des figures 3 et 4, par rapport à la première configuration des figures 1 et 2, tient au fait que le bloc isolant 110 de la première configuration (figures 1 et 2) est placé sur une portion 12 formée d'une face 11 plane ou annulaire avec un rayon constant tandis que le bloc isolant 110 de la deuxième configuration (figures 3 et 4) est placé sur une portion 12' formée d'une face 11' avec un coin rentrant ou annulaire avec un rayon qui varie pour former un épaulement rentrant.

Dans ce dernier cas, l'élément de liaison 140 suit le contour de la portion 12'.

A noter que sur les figures 1 à 4, le dispositif d'isolation 100 peut recouvrir une portion de l'équipement délimitée par toute forme et toute dimension possibles d'une zone la surface extérieure de l'équipement 10, mais aussi, surtout lorsque l'équipement 10 présente une symétrie de révolution, une portion annulaire de l'équipement.

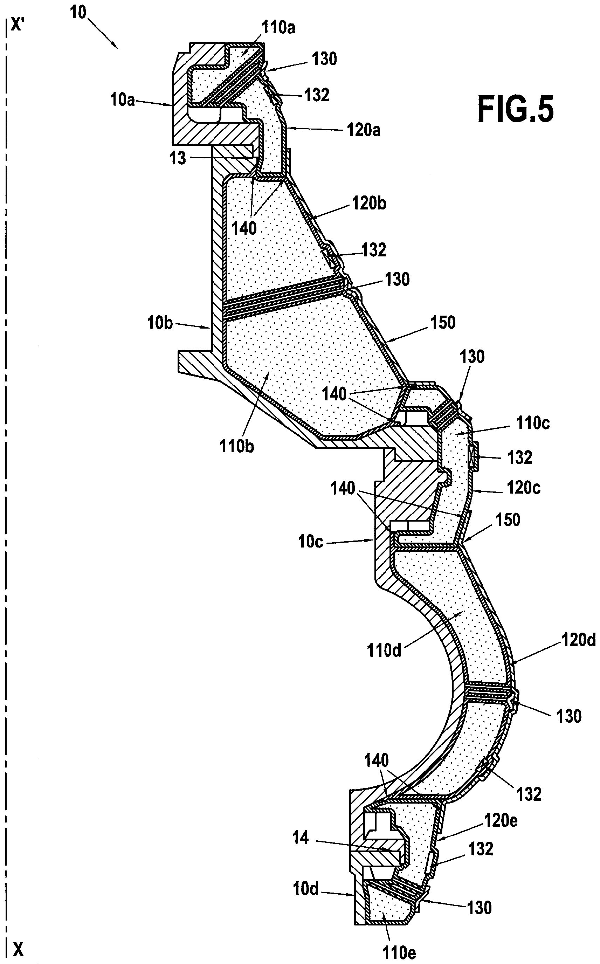

Ainsi, c'est ce qui intervient dans le cas de la figure 5, où l'équipement 10 est constitué de l'ensemble carter d'une turbopompe, visible en coupe partielle sur la figure 5, qui présente une symétrie de révolution autour de l'axe X-X', et comporte, de haut en vas sur la figue 5, une manchette 10a, un carter avant 10b, un carter central 10c, et un carter de turbine 10c.

Il existe des zones de fuite possible pour l'ergol entre la manchette 10a et le carter avant 10b (zone 13) et entre le carter central 10c et le carter turbine 10d (zone 14), où le maintien d'une étanchéité est tout particulièrement critique.

A cet effet, les différents blocs d'isolation utilisés sont les suivants :
- un premier bloc isolant 110a qui entoure la manchette et la première zone de fuite ergol 13 et s'étendant axialement jusqu'au tronçon du carter avant 10b qui est attenant à la manchette 10a (portion d'extrémité axiale supérieure sur la figure 5),
- un deuxième bloc isolant 110b qui est attenant au premier bloc isolant 110a et entoure le carter avant 110b hormis ses portions d'extrémité axiale,
- un troisième bloc isolant 110c qui est attenant au deuxième bloc isolant 110b et entoure le tronçon du carter avant 10b qui est attenant au carter central 10c (portion d'extrémité axiale inférieure sur la figure 5) et entoure le tronçon du carter central 10c (portion d'extrémité axiale supérieure sur la figure 5) qui est attenant au carter avant 10b,
- un quatrième bloc isolant 110d qui est attenant au troisième bloc isolant 110c et entoure le carter central 10c hormis ses portions d'extrémité axiale, et
- un cinquième bloc isolant 110e qui est attenant au quatrième bloc isolant 110d et entoure le tronçon du carter central 10c qui est attenant au carter de turbine 10d (portion d'extrémité axiale inférieure sur la figure 5) et entoure le tronçon du carter de turbine 10d (portion d'extrémité axiale supérieure sur la figure 5) qui est attenant au carter central 10c.

Chacun de ces blocs isolants 110a, 110b, 110c, 110d et 110e est entouré de son enveloppe, respectivement 120a, 120b, 120c, 120d, et 120e sur la figure 5, selon l'agencement précédemment décrit.

Des éléments de liaison 140 sont disposés également pour refermer de façon étanche l'espace entre chaque enveloppe 120a, 120b, 120c, 120d, et 120e et la portion de paroi de l'équipement 10 qui lui fait face.

Enfin, dans ce cas, on prévoit d'utiliser un ou plusieurs film ou housse thermo-rétractable 150 pour maintenir ensemble plusieurs (au moins deux) des enveloppes attenantes parmi les enveloppes 120a, 120b, 120c, 120d, et 120e.

De cette façon, on forme un système isolé comprenant un équipement 10, tel qu'un équipement cryogénique, et un ensemble pour isoler ledit équipement, qui recouvre au moins partiellement la face extérieure dudit équipement 10, et comprenant un dispositif d'isolation 100 et des moyens de liaison 140 déformables aptes à fixer le bloc d'isolant 110 recouvert de l'enveloppe 120 contre la face extérieure de ladite portion d'équipement 10.

Pour l'installation de cet ensemble pour isoler, on utilise en outre des moyens de mise en dépression (non représentés) aptes à être reliés à la première ouverture 121 et à la deuxième ouverture 122 pour chacune des enveloppes 120a, 120b, 120c, 120d, et 120e.

Pour le procédé, lors de l'étape b) de réalisation d'au moins un premier perçage 113 dudit bloc d'isolant 110, on réalise en outre un deuxième perçage 114 dudit bloc d'isolant 110 présentant une première extrémité 114a débouchant en regard de la face extérieure dudit équipement 10 et une deuxième extrémité 114b débouchant à l'écart de la face extérieure dudit équipement.

Par ailleurs, lors de l'étape c), ladite enveloppe étanche 120 recouvre la paroi du deuxième perçage 114 en laissant ouverte la première extrémité 114a et la deuxième extrémité 114b.

Egalement, avant l'étape e), on fournit en outre le premier indicateur de pression 130 que l'on place en refermant de façon étanche à l'emplacement de la deuxième extrémité 114a du deuxième perçage 114.

Avantageusement, de préférence mais de façon non systématique, on comprend que lors de l'étape c) de mise en place de l'enveloppe 120, on fournit en outre un deuxième indicateur de pression 132 que l'on place entre ladite enveloppe 120 et ledit bloc d'isolant 110.

Lorsqu'on utilise plusieurs ensembles comportant un bloc d'isolation 110 et une enveloppe, lesdits ensembles étant aptes à recouvrir des portions adjacentes de la face extérieure dudit équipement 10 par la mise en oeuvre des étapes a) à g) du procédé décrit précédemment en relation avec un seul bloc d'isolation, ledit procédé pour isoler thermiquement ledit équipement comporte en outre les étapes suivantes :
h) on fournit en outre une housse extérieure thermo-rétractable 150,
i) on place ladite housse 150 de sorte qu'elle entoure partiellement au moins deux desdits ensembles formés chacun de leur bloc d'isolation 110a, 110b, 110c, 110d et 110e revêtu de son enveloppe 120a, 120b, 120c, 120d, et 120e fermée de façon étanche, et
j) on chauffe ladite housse 150 de façon qu'elle se rétracte et enserre lesdits ensembles.

Au final, la solution selon la présente invention permet d'isoler thermiquement et d'étancher une pièce (un équipement 10) à l'environnement ambiant afin de le prémunir des condensats, du givre et du cryopompage

## Revendications

1. Procédé d'isolation thermique d'un équipement (10), notamment d'un équipement (10) de cryogénie, comprenant les étapes suivantes :
a) on fournit au moins un bloc d'isolant (110) thermique présentant une complémentarité de forme avec la face extérieure d'une portion dudit équipement (10),
b) on réalise au moins un premier perçage (113) dudit bloc d'isolant (110) présentant une première extrémité débouchant en regard de la face extérieure dudit équipement (10) et une deuxième extrémité débouchant à l'écart de la face extérieure dudit équipement (10),
c) on place ledit bloc d'isolant (110) thermique dans une enveloppe (120) déformable réalisée dans un matériau étanche aux gaz de sorte que la paroi dudit premier perçage (113) soit recouverte de ladite enveloppe (120) étanche en laissant ouvertes la première extrémité et la deuxième extrémité dudit premier perçage (113) et en ce que l'enveloppe (120) définit, au niveau de la deuxième extrémité, une première ouverture qui communique avec le premier perçage (113) et une deuxième ouverture (122) qui communique avec l'espace situé entre le bloc isolant et l'enveloppe
d) on fixe le bloc d'isolant (110) recouvert de l'enveloppe (120) contre la face extérieure de ladite portion d'équipement (10) par des moyens de liaison (140) étanches et déformables de façon que l'espace délimité entre le bloc d'isolant (110) et ladite portion d'équipement (10) présente un contour fermé,
e) on relie la première ouverture (121) et la deuxième ouverture (122) à des moyens de mise en dépression,
f) on active lesdits moyens de mise en dépression, ce par quoi l'intérieur de l'enveloppe (120) se trouve sous vide partiel et l'enveloppe (120) est plaquée d'une part contre le bloc d'isolant (110) et d'autre part contre ladite portion d'équipement (10), et
g) on ferme de façon étanche la première ouverture (121) et la deuxième ouverture (122) de l'enveloppe (120).

2. Procédé selon la revendication 1, **caractérisé en ce que** lors de l'étape b) on réalise en outre un deuxième perçage (114) dudit bloc d'isolant (110) présentant une première extrémité débouchant en regard de la face extérieure dudit équipement (10) et une deuxième extrémité débouchant à l'écart de la face extérieure dudit équipement (10),
**en ce que** lors de l'étape c), ladite enveloppe (120) étanche recouvre la paroi du deuxième perçage (114) en laissant ouverte la première extrémité et la deuxième extrémité
et **en ce que**, avant l'étape e), on fournit en outre un premier indicateur de pression (130) que l'on place en refermant de façon étanche à l'emplacement de la deuxième extrémité du deuxième perçage (114).

3. Procédé selon l'une quelconque des revendications précédentes, **caractérisé en ce que** lors de l'étape c) on fournit en outre un deuxième indicateur de pression que l'on place entre ladite enveloppe (120) et ledit bloc d'isolant.

4. Procédé selon l'une quelconque des revendications précédentes, **caractérisé en ce que** lesdits moyens de liaison (140) comportent un bourrelet ou une languette faisant partie de ladite enveloppe 120 ou bien sont constitués d'un joint élastomère collé à ladite enveloppe 120.

5. Procédé selon l'une quelconque des revendications précédentes, **caractérisé en ce qu'**on utilise plusieurs ensembles comportant un bloc d'isolation et une enveloppe, lesdits ensembles étant aptes à recouvrir des portions adjacentes de la face extérieure dudit équipement (10) par la mise en oeuvre des étapes a) à g) du procédé de la revendication 1, et **en ce que** ledit procédé comporte en outre les étapes suivantes :
h) on fournit en outre une housse extérieure thermo-rétractable,
i) on place ladite housse de sorte qu'elle entoure partiellement au moins deux desdits ensembles formés chacun de leur bloc d'isolation revêtu de son enveloppe (120) fermée de façon étanche, et
j) on chauffe ladite housse de façon qu'elle se rétracte et enserre lesdits ensembles.

6. Dispositif pour isoler thermiquement un équipement (10), comprenant :
- un bloc d'isolant (110) thermique présentant une complémentarité de forme avec la face extérieure d'une portion dudit équipement (10) à isoler, ledit bloc d'isolant (110) comprenant au moins un premier perçage (113) présentant une première extrémité apte à déboucher en regard de la face extérieure dudit équipement (10) et une deuxième extrémité apte à déboucher à l'écart de la face extérieure dudit équipement (10),
- une enveloppe (120) déformable réalisée dans un matériau étanche aux gaz, ladite enveloppe (120) entourant le bloc d'isolant (110) de sorte que la paroi dudit premier perçage (113) soit recouverte de ladite enveloppe (120) étanche en laissant ouverte la première extrémité et la deuxième extrémité dudit premier perçage, l'enveloppe (120) définissant, au niveau de la deuxième extrémité, une première ouverture (121) apte à être fermée de façon étanche qui communique avec le premier perçage (113) et une deuxième ouverture (122) apte à être fermée de façon étanche qui communique avec l'espace situé entre le bloc isolant et l'enveloppe, et la première ouverture (121) et la deuxième ouverture (122) de l'enveloppe (120) étant fermées de façon étanche avec l'intérieur de l'enveloppe (120) sous vide partiel.

7. Dispositif selon la revendication précédente, **caractérisé en ce que** ledit bloc d'isolant (110) comportant un deuxième perçage (114) présentant une première extrémité débouchant en regard de la face extérieure dudit équipement (10) et une deuxième extrémité débouchant à l'écart de la face extérieure dudit équipement (10),
**en ce que** ladite enveloppe (120) étanche recouvre la paroi du deuxième perçage (114) en laissant ouvertes la première extrémité et la deuxième extrémité
et **en ce qu'**il comporte en outre un premier indicateur de pression (130) placé en refermant la deuxième extrémité du deuxième perçage.

8. Dispositif selon l'une quelconque des revendications 6 à 7, **caractérisé en ce qu'**il comporte en outre un deuxième indicateur de pression placé entre ladite enveloppe (120) et ledit bloc d'isolant.

9. Dispositif selon l'une quelconque des revendications 6 à 8, **caractérisé en ce que** la deuxième ouverture (122) entoure la première ouverture (121)

10. Dispositif selon l'une quelconque des revendications 6 à 9, **caractérisé en ce que** ledit bloc d'isolant (110) est réalisé dans un matériau poreux.

11. Dispositif selon l'une quelconque des revendications 6 à 10, **caractérisé en ce que** ladite enveloppe (120) est réalisée dans un matériau élastomère

12. Dispositif selon l'une quelconque des revendications 6 à 11, **caractérisé en ce que** ladite enveloppe (120) est réalisée dans une matière transparente ou translucide.

13. Ensemble apte à être utilisé pour isoler un équipement (10), comprenant un dispositif selon l'une quelconque des revendications 6 à 12 et des moyens de liaison (140) déformables aptes à fixer le bloc d'isolant (110) recouvert de l'enveloppe (120) contre la face extérieure de ladite portion d'équipement (10) tout en délimitant, entre le bloc d'isolant (110) et ladite portion d'équipement (10), un espace avec un contour fermé.

14. Ensemble selon la revendication précédente, **caractérisé en ce que** lesdits moyens de liaison (140) comportent un bourrelet ou une languette faisant partie de ladite enveloppe (120) ou sont constitués d'un joint élastomère collé à ladite enveloppe (120).

15. Système isolé comprenant un équipement (10), tel qu'un équipement (10) cryogénique, et un ensemble selon la revendication 13 ou 14 qui recouvre au moins partiellement la face extérieure dudit équipement (10).

## Patentansprüche

1. Verfahren zur Wärmeisolierung einer Ausrüstung (10), insbesondere einer Kryotechnikausrüstung (10), umfassend die folgenden Schritte:
a) Bereitstellung mindestens eines Wärmeisolierblocks (110), der eine Formkomplementarität mit der Außenfläche eines Abschnitts der Ausrüstung (10) aufweist,
b) Herstellung mindestens einer ersten Bohrung (113) des Isolierblockes (110), die ein erstes Ende, das gegenüber der Außenfläche der Ausrüstung (10) mündet, und ein zweites Ende, das von der Außenfläche der Ausrüstung (10) entfernt mündet,
c) Anordnen des Wärmeisolierblocks (110) in einer verformbaren Hülle (120), die aus einem gegen Gase dichten Material hergestellt ist, so dass die Wand der ersten Bohrung (113) mit der dichten Hülle (120) bedeckt ist, wobei das erste Ende und das zweite Ende der ersten Bohrung (113) offen bleiben, und dass die Hülle (120) im Bereich des zweiten Endes eine erste Öffnung, die mit der ersten Bohrung (113) in Verbindung steht, und eine zweite Öffnung (122), die mit dem Raum zwischen dem Isolierblock und der Hülle in Verbindung steht, definiert,
d) Befestigung des mit der Hülle (120) bedeckten Isolierblocks (110) an der Außenfläche des Ausrüstungsabschnitts (10) durch dichte und verformbare Verbindungsmittel (140), so dass der zwischen dem Isolierblock (110) und dem Ausrüstungsabschnitt (10) begrenzte Raum eine geschlossene Kontur aufweist,
e) Verbinden der ersten Öffnung (121) und der zweiten Öffnung (122) mit Mitteln zur Herstellung eines Unterdrucks,
f) Aktivieren der Mittel zur Herstellung eines Unterdrucks, wodurch sich das Innere der Hülle (120) unter Teilvakuum befindet, und die Hülle (120) einerseits an den Isolierblock (110) und andererseits an den Ausrüstungsabschnitt (10) gedrückt wird, und
g) dichtes Verschließen der ersten Öffnung (121) und der zweiten Öffnung (122) der Hülle (120).

2. Verfahren nach Anspruch 1, **dadurch gekennzeichnet, dass** in Schritt b) ferner eine zweite Bohrung (114) des Isolierblocks (110) hergestellt wird, die ein erstes Ende, das gegenüber der Außenfläche der Ausrüstung (10) mündet, und ein zweites Ende, das von der Außenfläche der Ausrüstung (10) entfernt mündet, aufweist,
dass in Schritt c) die dichte Hülle (120) die Wand der zweiten Bohrung (114) bedeckt, wobei das erste Ende und das zweite Ende offen bleiben,
und dass vor dem Schritt e) ferner eine erste Druckanzeige (130) bereitgestellt wird, die dicht abschließend an der Stelle des zweiten Endes der zweiten Bohrung (114) angeordnet wird.

3. Verfahren nach einem der vorhergehenden Ansprüche, **dadurch gekennzeichnet, dass** in Schritt c) ferner eine zweite Druckanzeige bereitgestellt wird, die zwischen der Hülle (120) und dem Isolierblock angeordnet wird.

4. Verfahren nach einem der vorhergehenden Ansprüche, **dadurch gekennzeichnet, dass** die Verbindungsmittel (140) einen Wulst oder eine Lasche umfassen, die Teil der Hülle (120) ist, oder auch von einer Elastomerdichtung gebildet sind, die an die Hülle (120) geklebt ist.

5. Verfahren nach einem der vorhergehenden Ansprüche, **dadurch gekennzeichnet, dass** mehrere Einheiten, umfassend einen Isolierblock und eine Hülle, verwendet werden, wobei die Einheiten geeignet sind, angrenzende Abschnitte der Außenfläche der Ausrüstung (10) durch den Einsatz der Schritte a) bis g) des Verfahrens nach Anspruch 1 abzudecken, und dass das Verfahren ferner die folgenden Schritte umfasst:
h) ferner Bereitstellung einer wärmeschrumpfbaren Außenverkleidung,
i) Anordnen der Verkleidung derart, dass sie zumindest teilweise zwei der Einheiten umgibt, die jeweils von ihrem Isolierblock gebildet sind, der mit seiner dicht verschlossenen Hülle (120) bedeckt ist, und
j) Erhitzen der Verkleidung, so dass sie schrumpft und die Einheiten fest umgibt.

6. Vorrichtung zur Wärmeisolierung einer Ausrüstung (10), umfassend:
- einen Wärmeisolierblock (110), der eine Formkomplementarität mit der Außenfläche eines zu isolierenden Abschnitts der Ausrüstung (10) aufweist, wobei der Isolierblock (110) mindestens eine erste Bohrung (113) umfasst, die ein erstes Ende, das geeignet ist, gegenüber der Außenfläche der Ausrüstung (10) zu münden, und ein zweites Ende, das geeignet ist, von der Außenfläche der Ausrüstung (10) entfernt zu münden, aufweist,
- eine verformbare Hülle (120), die aus einem gegen Gase dichten Material hergestellt ist, wobei die Hülle (120) den Isolierblock (110) umgibt, so dass die Wand der ersten Bohrung (113) mit der dichten Hülle (120) bedeckt ist, wobei das erste Ende und das zweite Ende der ersten Bohrung offen bleiben, wobei die Hülle (120) im Bereich des zweiten Endes eine erste Öffnung (121), die geeignet ist, dicht verschlossen zu werden und die mit der ersten Bohrung (113) in Verbindung steht, und eine zweite Öffnung (122) definiert, die geeignet ist, dicht verschlossen zu werden, und die mit dem Raum zwischen dem Isolierblock und der Hülle in Verbindung steht, und wobei die erste Öffnung (121) und die zweite Öffnung (122) der Hülle (120) dicht verschlossen sind, wobei das Innere der Hülle (120) unter Teilvakuum ist.

7. Vorrichtung nach dem vorhergehenden Anspruch, **dadurch gekennzeichnet, dass** der Isolierblock (110) eine zweite Bohrung (114) umfasst, die ein erstes Ende, das gegenüber der Außenfläche der Ausrüstung (10) mündet, und ein zweites Ende, das von der Außenfläche der Ausrüstung (10) entfernt mündet, aufweist,
dass die dichte Hülle (120) die Wand der zweiten Bohrung (114) bedeckt, wobei das erste und das zweite Ende offen bleiben,
und dass sie ferner eine erste Druckanzeige (130) umfasst, die mit dem zweiten Ende der zweiten Bohrung dicht abschließend angeordnet ist.

8. Vorrichtung nach einem der Ansprüche 6 bis 7, **dadurch gekennzeichnet, dass** sie ferner eine zweite Druckanzeige umfasst, die zwischen der Hülle (120) und dem Isolierblock angeordnet ist.

9. Vorrichtung nach einem der Ansprüche 6 bis 8, **dadurch gekennzeichnet, dass** die zweite Öffnung (122) die erste Öffnung (121) umgibt.

10. Vorrichtung nach einem der Ansprüche 6 bis 9, **dadurch gekennzeichnet, dass** der Isolierblock (110) aus einem porösen Material hergestellt ist.

11. Vorrichtung nach einem der Ansprüche 6 bis 10, **dadurch gekennzeichnet, dass** die Hülle (120) aus einem Elastomermaterial hergestellt ist.

12. Vorrichtung nach einem der Ansprüche 6 bis 11, **dadurch gekennzeichnet, dass** die Hülle (120) aus einem durchsichtigen oder durchscheinenden Material hergestellt ist.

13. Einheit, die geeignet ist, zur Isolierung einer Ausrüstung (10) verwendet zu werden, umfassend eine Vorrichtung nach einem der Ansprüche 6 bis 12 und verformbare Verbindungsmittel (140), die geeignet sind, den Isolierblock (110), der mit der Hülle (120) bedeckt ist, an der Außenfläche des Ausrüstungsabschnitts (10) zu befestigen, wobei zwischen dem Isolierblock (110) und dem Ausrüstungsabschnitt (10) ein Raum mit einer geschlossenen Kontur begrenzt wird.

14. Einheit nach dem vorhergehenden Anspruch, **dadurch gekennzeichnet, dass** die Verbindungsmittel (140) einen Wulst oder eine Lasche umfassen, die Teil der Hülle (120) ist, und von einer Elastomerdichtung, die an die Hülle (120) geklebt ist, gebildet sind.

15. Isoliertes System, umfassend eine Ausrüstung (10), wie eine Kryotechnikausrüstung (10), und eine Einheit nach Anspruch 13 oder 14, die zumindest teilweise die Außenfläche der Ausrüstung (10) bedeckt.

## Claims

1. A method of thermally insulating a piece of equipment (10), in particular cryogenic equipment (10), the method comprising the following steps:
a) supplying at least one block (110) of thermal insulation presenting a shape complementary to the outside face of a portion of said equipment (10);
b) making at least a first hole (113) in said block of insulation (110) presenting a first end opening out facing the outside face of said equipment (10) and a second end opening out away from the outside face of said equipment (10);
c) placing said block (110) of thermal insulation in a deformable cover (120) made of a gastight material such that the wall of said first hole (113) is covered by said gastight cover (120) while leaving the first end and the second end of said hole (113) open and in that the cover (120) defines, at the second end, a first opening that communicates with the first hole (113) and a second opening (122) that communicates with the space situated between the insulating block and the cover;
d) fastening the block of insulation (110) covered in the cover (120) against the outside face of said portion of equipment (10) by gastight and deformable connection means (140) so that the space defined between the block of insulation (110) and said portion of equipment (10) presents a closed outline;
e) connecting the first opening (121) and the second opening (122) to suction means;
f) activating said suction means whereby the inside of the cover (120) is partially evacuated and the cover (120) is pressed firstly against the block of insulation (110) and secondly against said portion of equipment (10); and
g) closing the first opening (121) and the second opening (122) of the cover (120) in gastight manner.

2. A method according to claim 1, **characterized in that** during step b) a second hole (114) is formed in said block of insulation (110), presenting a first end opening out facing the outside face of said equipment (10) and a second end opening out away from the outside face of said equipment (10);
**in that** during step c), said gastight cover (120) covers the wall of the second hole (114) while leaving open the first and second ends; and
**in that**, prior to step e), a first pressure indicator (130) is also provided that is put into place by being enclosed in gastight manner at the location of the second end of the second hole (114).

3. A method according to either preceding claim, **characterized in that** during step c), a second pressure indicator is also provided that is placed between said cover (120) and said block of insulation.

4. A method according to any preceding claim, **characterized in that** said connection means (140) comprise a pad or a tongue forming part of said cover 120 or are constituted by an elastomer gasket adhesively bonded to said cover 120.

5. A method according to any preceding claim, **characterized in that** use is made of a plurality of assemblies, each comprising a block of insulation and a cover, said assemblies being suitable for covering adjacent portions of the outside face of said equipment (10) by performing steps a) to g) of the method of claim 1, and **in that** said method further comprises the following steps:
h) also providing a heat-shrink outer bag;
i) placing said bag in such a manner as to surround in part at least two of said assemblies each formed by a respective block of insulation covered by its cover (120) closed in gastight manner; and
j) heating said bag so that it shrinks and clamps against said assemblies.

6. A device for thermally insulating a piece of equipment (10), the device comprising:
• a block (110) of thermal insulation presenting a shape complementary to the shape of the outside face of a portion of said equipment (10) to be insulated; said block of insulation (110) including at least a first hole (113) presenting a first end suitable for opening out facing the outside face of said equipment (10) and a second end suitable for opening out away from the outside face of said equipment (10);
• a deformable cover (120) made of a gastight material, said cover (120) surrounding the block of insulation (110) so that the wall of said first hole (113) is covered by said gastight cover (120) while leaving open the first and second ends of said first hole, the cover (120) defining, at the second end, a first opening (121) suitable for being closed in gastight manner and communicating with the first hole (113), and a second opening (122) suitable for being closed in gastight manner and communicating with the space situated between the insulating block and the cover, and the first opening (121) and the second opening (122) of the cover (120) being closed in gastight manner while the inside of the cover (120) is under a partial vacuum.

7. A device according to the preceding claim, **characterized in that** said block of insulation (110) has a second hole (114) presenting a first end opening out facing the outside face of said equipment (10) and a second end opening out away from the outside face of said equipment (10), **in that** said gastight cover (120) covers the wall of the second hole (114) while leaving open its first and second ends; and **in that** it further includes a first pressure indicator (130) put into place by closing the second end of the second hole.

8. A device according to claim 6 or claim 7, **characterized in that** it further includes a second pressure indicator put into place between said cover (120) and said block of insulation.

9. A device according to any one of claims 6 to 8, **characterized in that** the second opening (122) surrounds the first opening (121).

10. A device according to any one of claims 6 to 9, **characterized in that** said block of insulation (110) is made of a porous material.

11. A device according to any one of claims 6 to 10, **characterized in that** said cover (120) is made of an elastomer material.

12. A device according to any one of claims 6 to 11, **characterized in that** said cover (120) is made of a material that is transparent or translucent.

13. An assembly suitable for use in isolating a piece of equipment (10), the assembly comprising a device according to any one of claims 6 to 12 and deformable connection means (140) suitable for fastening the block of insulation (110) covered in the cover (120) against the outside face of said portion of equipment (10), while defining, between the block of insulation (110) and said portion of equipment (10), a space having a closed outline.

14. An assembly according to the preceding claim, **characterized in that** said connection means (140) comprise a pad or a tongue forming part of said cover (120) or they are constituted by an elastomer gasket adhesively bonded to said cover (120).

15. An insulated system comprising a piece of equipment (10), such as cryogenic equipment (10), and an assembly according to claim 13 or claim 14 covering the outside face of said equipment (10) at least in part.
